# EUROPÄISCHE PATENTSCHRIFT

(11) **EP 3 681 660 B1**
(45) Veröffentlichungstag und Bekanntmachung des Hinweises auf die Patenterteilung: **01.05.2024**
(21) Anmeldenummer: 18769616.6
(22) Anmeldetag: 05.09.2018
(51) Int. Cl.: B23B 51/00, B23B 51/06

(54) **VIERSCHNEIDIGER BOHRER**
FOUR-EDGED DRILL
FORET À QUATRE TRANCHANTS

(30) Priorität: 15.09.2017 DE 102017216393
(43) Veröffentlichungstag der Anmeldung: 22.07.2020
(73) Patentinhaber: Gühring KG, 72458 Albstadt (DE)
(72) Erfinder: KUNZE, Philipp, 72666 Neckartailfingen (DE)
(74) Vertreter: Winter, Brandl - Partnerschaft mbB
(86) Internationale Anmeldenummer: PCT/EP2018/073886
(87) Internationale Veröffentlichungsnummer: WO 2019/052876

(56) Entgegenhaltungen:
- EP-A1- 2 535 129
- EP-A1- 3 045 245
- EP-A2- 2 047 932
- DE-A1-102009 024 256
- DE-A1-102014 212 714
- JP-A- 2016 203 369
- US-A1- 2003 077 134
- US-A1- 2006 243 496

## Beschreibung

Die Erfindung betrifft einen vierschneidigen Bohrer, im Besonderen Tieflochbohrer, zur Zerspanung von schwer zerspanbaren Guss- und Leichtmetallwerkstoffen, wie sie im Motorenbau eingesetzt werden.

Derartige Werkstoffe sind nur dann wirtschaftlich zu bearbeiten, wenn es gelingt, neben dem Werkstoff des Bohrers die Geometrie derart an die Zerspanungsaufgabe anzupassen, dass sich ausreichende Standzeiten bzw. Standwege ergeben. In der US 5,173,014 ist ein spiralgenuteter vierschneidiger Bohrer vorgeschlagen, der für eine Bohrbearbeitung eines Motorenblocks aus Gusseisen zwei bezüglich der Drehachse punktsymmetrisch angeordnete lange Hauptschneiden, die sich jeweils von einer außenumfangsseitigen, abgeschrägten Schneidenecke bis zu einer Querschneide in der Mitte der Bohrerspitze erstrecken, und zwei bezüglich der Drehachse punktsymmetrisch angeordnete kurze Hauptschneiden hat, die sich jeweils von einer außenumfangsseitigen, abgeschrägten Schneidenecke bis in den Bohrerkern hinein, aber nicht bis zur Mitte der Bohrerspitze erstrecken. Jede der vier Hauptschneiden ist durchgehend geradlinig ausgebildet und liegt, in Dreh- oder Schnittrichtung des Bohrers gesehen, vor einer Diametralebene des Bohrers. Die die Hauptschneiden gestaltenden Spanflächen begrenzen jeweils eine schräg nach außen geneigte primäre Spanabführmulde, die in eine zugeordnete spiralförmig verlaufende Spannut mündet. Jede Hauptschneide hat von ihrer außenumfangsseitigen Schneidenecke bis zu ihrem inneren Ende einen Spanwinkel von 0°. Seitlich der Querschneide sind sekundäre Spanabführnuten vorgesehen, die sich jeweils von der primären Spanabführnut einer kurzen Hauptschneide ausgehend schräg nach außen bis zu der primären Spanabführnut einer langen Hauptschneide erstrecken. In diesen sekundären Spanabführnuten liegen die Austrittsöffnungen zweier Kühlschmierstoffzufuhrkanäle.

Aufgrund der sich bis zur Mitte der Bohrerspitze erstreckenden langen Hauptschneiden ermöglicht der in der US 5,173,014 vorgeschlagene Bohrer ein Bohren in das Volle. Die die beiden langen Hauptschneiden verbindende Querschneide hat, wie bei einem herkömmlichen zweischneidigen Spiralbohrer, aber keine Schneidwirkung. Sie übt lediglich Druck und Reibung auf das Werkstück aus und ist dadurch im Grunde dem Bohren ins Volle hinderlich. Die durch die Querschneide von einem Werkstück abgeschabten Späne fließen durch die sekundären Spanabführnuten und die Freiflächen der langen Hauptschneiden in die primären Spanabführnuten und die Spannuten ab. Ab einem ausreichend großen Vorschubweg schneiden sowohl die beiden langen Hauptschneiden als auch die beiden kurzen Hauptschneiden voneinander unabhängig in ein Werkstück, wobei die Spanbreite der von den Hauptschneiden erzeugten Späne von der Länge der jeweiligen Hauptschneide abhängt. Die Zerspanungslast verteilt sich daher auf vier Schneiden, wobei die Belastung der langen Hauptschneiden größer ist als der kurzen Hauptschneiden mit der Folge, dass die langen Hauptschneiden frühzeitiger verschleißen können. Bei einer hohen Vorschubgeschwindigkeit kann es aufgrund des größeren Spanquerschnitts der an den langen Hauptschneiden entstehenden breiteren Späne, insbesondere beim Tiefbohren, leicht zu einem Spänestau kommen.

Die Druckschrift EP 2 535 129 A1 zeigt einen vierschneidigen Bohrer gemäß dem Oberbegriff des Anspruchs 1 mit zwei in einem Winkel von 180° gegenüberliegenden erste Schneiden auf, die sich von einer außenumfangsseitigen Schneidenecke bis zu einer Bohrerspitze erstrecken und an der Bohrerspitze zusammenlaufen. Der Bohrer weist jeweils von den ersten Schneiden abgestufte und um 90° um die Drehachse des Bohrers beabstandete zweite Schneiden und dritte Schneiden auf.

Die Druckschrift US 2006/0243496 A1 zeigt einen weiteren vierschneidigen Bohrer mit zwei langen Hauptschneiden, die sich von einer außenumfangsseitigen Schneidenecke bis zu einer Querschneide in der Mitte der Bohrerspitze, und zwei zu den langen Hauptschneiden querliegenden Nebenscheiden.

Die Druckschriften DE 10 2014 212 714 A1 und DE 10 2009 024 256 A1 zeigen weitere Bohrer mit abgestuften Schneiden.

Ausgehend von dem aus der US 2006/0243496 A1 bekannten Bohrer liegt der Erfindung die Aufgabe zugrunde, einen zur Zerspanung von im Motorenbau eingesetzten schwer zerspanbaren Gusswerkstoffen und Leichtmetallwerkstoffen geeigneten vierschneidigen Bohrer, im Besonderen Tieflochbohrer, zu schaffen, der sich selbst bei hohen Vorschubgeschwindigkeiten durch ein hohes Standvermögen und eine verbesserte Spanabfuhr auszeichnet.

Diese Aufgabe wird durch einen Bohrer mit den Merkmalen des Anspruchs 1 gelöst.

Ein erfindungsgemäßer vierschneidiger (Tiefloch-)Bohrer hat eine Bohrerspitze mit zwei bezüglich der Drehachse punktsymmetrisch angeordneten längeren oder (im Folgenden:) langen Hauptschneiden, die sich jeweils von einer außenumfangsseitigen Schneidenecke bis zu einer Querschneide in der Mitte der Bohrerspitze erstrecken, und zwei bezüglich der Drehachse punktsymmetrisch angeordneten kürzeren oder (im Folgenden:) kurzen Hauptschneiden, die sich jeweils von einer außenumfangsseitigen Schneidenecke in Richtung der, aber nicht bis zur Mitte der Bohrerspitze erstrecken. Jede lange Hauptschneide weist erfindungsgemäße eine sich von der Schneidenecke bis zu einer Stufe oder (im Folgenden:) einem Absatz erstreckende äußere Teilschneide und eine sich von dem Absatz bis zur Querschneide erstreckende innere Teilschneide auf. Die inneren Teilschneiden haben eine größere Schneidhöhe als die äußeren Teilschneiden und die beiden kurzen Hauptschneiden. Die äußeren Teilschneiden und die inneren Teilschneiden haben einen gleichen Spitzenwinkel. Die durch den Absatz erreichte Schneidhöhendifferenz zwischen den inneren Teilschneiden und den äußeren Teilschneiden der langen Hauptschneiden liegt im Bereich des 0,02 bis 0,1-fachen, im Besonderen des 0,04 bis 0,08-fachen, des Nenndurchmessers des Bohrers.

Im Unterschied zu dem eingangs diskutierten Werkzeug der US 5,173,014 sind bei einem erfindungsgemäßen Bohrer die langen Hauptschneiden durch einen Absatz in äußere Teilschneiden und innere Teilschneiden unterteilt, wobei die inneren Teilschneiden, in Axial- oder Vorschubrichtung des Bohrers gesehen, höher liegen als die äußeren Teilschneiden, d.h. vor den äußeren Teilschneiden und den beiden kurzen Hauptschneiden in ein zu bearbeitendes Werkstück schneiden. Die inneren Teilscheiden bilden daher eine von den äußeren Teilschneiden und den kurzen Hauptschneiden in Axial- oder Vorschubrichtung abgesetzte zweischneidige Spitze. Die höher liegenden inneren Teilschneiden können daher auch als Vor- oder Vollbohrschneiden bezeichnet werden, durch die der Bohrer ins Volle schneiden kann, während die äußeren Teilschneiden und die kurzen Hauptschneiden auch als Aufbohrschneiden bezeichnet werden können, durch die das durch die inneren Teilschneiden erzeugte Bohrloch aufgebohrt wird.

Durch die höher liegenden inneren Teilschneiden wird zum einen eine Selbstzentrierung erreicht, durch die der Bohrer bei einer Bohrbearbeitung eines Werkstücks ins Volle schneiden kann, ohne zu verlaufen. Ein Vorbohren ist daher nicht erforderlich. Es ergibt sich daher eine gute Maß- und Formgenauigkeit der Bohrung. Im Unterschied zu beispielsweise herkömmlichen Einlippen-Tieflochbohrern ist bei dem erfindungsgemäßen Bohrer daher keine Führung erforderlich.

Zum anderen bewirkt die Unterteilung der langen Hauptschneiden eine Lastverteilung auf die inneren und äußeren Teilschneiden. Die höher liegenden inneren Teilschneiden liegen im Bereich des Kerns des Bohrers, in dem das Spanvolumen bei einer Bohrbearbeitung eines Werkstücks geringer ist als in dem Bereich außerhalb des Kerns des Bohrers. In dem äußeren Bohrerbereich, in dem das Spanvolumen größer ist, sind neben den beiden äußeren Teilschneiden die beiden kurzen Hauptschneiden ausgebildet. Dadurch verteilt sich die Zerspanungslast im Bereich der auf Nenndurchmesser, d.h. bis zu den Schneidenecken, schneidenden Hauptschneiden, auf vier Schneiden, wodurch die Zerspanungslast je Schneide und damit auch der Verschleiß, insbesondere der Schneideneckverschleiß, gering gehalten werden kann.

Die Unterteilung der langen Hauptschneiden in die äußeren und inneren Teilschneiden bietet zudem die Möglichkeit, durch eine entsprechende Festlegung der Schneidkeilwinkel, durch eine Schneidenkorrektur, durch eine Querschneidenausspitzung und dergleichen Maßnahmen die inneren und äußeren Teilschneiden voneinander unabhängig den unterschiedlichen Zerspanungsbedingungen entsprechend optimal anzupassen.

Des Weiteren wird durch die Unterteilung der langen Hauptschneiden in die äußeren und inneren Teilschneiden erreicht, dass bei einer Bohrbearbeitung eines Werkstücks anstelle eines breiten Spans zwei schmälere Späne entstehen, die beim Ablaufen in den Spannuträumen des Bohrers miteinander kollidieren und daher brechen können. Dadurch wird ein guter Späneablauf erreicht.

In der Summe lässt sich erfindungsgemäß ein (Tiefloch-)Bohrer herstellen, der sich durch eine gute Zentrierung, eine hohe Rundlaufgüte, eine hohe Laufruhe und eine hohe Standzeit auszeichnet. Ein erfindungsgemäßer Bohrer eignet sich daher insbesondere auch für die Erzeugung tiefer Bohrlöcher in schwer zerspanbaren Guss- oder Leichtmetallwerkstoffen, wie sie im Motorenbau eingesetzt werden.

Die durch den Absatz erreichte Schneidhöhendifferenz zwischen den inneren Teilschneiden und den äußeren Teilschneiden der langen Hauptschneiden im Bereich des 0,02 bis 0,1-fachen, im Besonderen des 0,04 bis 0,08-fachen, des Nenndurchmessers des Bohrers kann einer Verringerung der Stabilität des Bohrers entgegengewirken.

Vorteilhafte oder bevorzugte Weiterbildungen sind Gegenstand abhängiger Ansprüche.

Umfangreiche Versuche mit unterschiedlichen Bohrerspitzenanschliffen haben gezeigt, das sich ein gutes Standvermögen dann erzielen lässt, wenn die von außenumfangsseitigen Schneidenecken in Richtung Bohrermitte verlaufenden äußeren Teilschneiden der langen Hauptschneiden und/oder kurzen Hauptschneiden außerhalb des Kerndurchmessers des Bohrers enden. Dadurch bleibt der Bohrerkernquerschnitt erhalten, wodurch eine hohe Standzeit gewährleistet werden kann. Zudem kann die Belastung der äußeren Teilschneiden der langen Hauptschneiden und/oder der kurzen Hauptschneiden begrenzt werden. Die erfindungsgemäße Bohrergestaltung lässt eine Ausdehnung des Kerndurchmessers bis auf das 0,4- bis 0,6-fache, im Besonderen in etwa das 0,5-fache, des Nenndurchmessers des Bohrers zu, was zu einer hohen Stabilität und Standzeit beiträgt.

Wenn die kurzen Hauptschneiden länger sind als die äußeren Teilschneiden, d.h. die kurzen Hauptschneiden sich näher an den Kerndurchmesser des Bohrers heran erstrecken als die äußeren Teilschneiden, ergibt sich bei einer Bohrbearbeitung eines Werkstücks eine ungleiche Belastung der äußeren Teilschneiden und der kurzen Hauptschneiden, wodurch die Ratterneigung des Bohrers beim Eindringen der kurzen Hauptschneiden und äußeren Teilschneiden der langen Hauptschneiden in ein Werkstück reduziert und damit die Laufruhe des Bohrers erhöht werden kann.

Durch Ausspitzen lassen sich die Schnittcharakteristiken der inneren Teilschneiden und/oder der Querschneide des Bohrers positiv beeinflussen. So kann der Verlauf der inneren Teilschneiden durch Ausspitzen dahingehend korrigiert werden, dass sie länger und scharfkantiger sind als ohne Ausspitzung, wodurch sich die Belastung auf eine größere Länge verteilen und verringern lässt. Im Besonderen können die inneren Teilschneiden so korrigiert sein, dass sie unter einem stumpfen Winkel zu der äußeren Teilschneide derselben Hauptschneide verlaufen. Unabhängig davon kann die Querschneide ausgespitzt sein, um sie möglichst kurz zu halten und scharfkantig auszubilden, wodurch sich auch im Bereich der Querschneide die Kräfte verringern lassen und ein punktgenaues Anbohren ins Volle ermöglicht wird. Durch das Ausspitzen wird außerdem eine Vergrößerung des Spannutvolumens erreicht, was zu einem guten Spanablauf bei einer Bohrbearbeitung eines Werkstücks beiträgt.

Die in außenumfangsseitige Spannuten des Bohrers mündenden Ausspitzungen zur Korrektur der inneren Teilschneiden und zur Verkürzung der Querschneide können beispielsweise einen in etwa V-förmigen Querschnitt mit abgerundetem Grund haben, dessen Öffnungswinkel im Bereich von 75° bis 85°, z.B. bei 80° liegt. Gute Ergebnisse lassen sich im Besonderen dann erzielen, wenn sich die Ausspitzungen jeweils in einem Winkel zwischen 30° und 45° zu einer Querschnittsebene des Bohrers (einer Ebene quer zur Drehachse des Bohrers) erstrecken. Derart große Ausspitzungen, die sich vom Kern bis zum Außenumfang des Bohrers erstrecken, tragen zu einem guten Spanablauf bei. Beispielsweise können die die inneren Teilschneiden korrigierenden Ausspitzungen sich jeweils in einem Winkel von in etwa 40° und die die Querschneide verkürzenden Ausspitzungen sich jeweils in einem Winkel von in etwa 35° zu einer Querschnittsebene des Bohrers erstrecken.

Der Bohrer kann des Weiteren in den an die kurzen Hauptschneiden angrenzenden Kernbereichen ausgespitzt sein. Diese im Querschnitt beispielsweise flachmuldenförmigen Ausspitzungen können sich jeweils in einem Winkel von 40° bis 50°, im Besonderen in etwa 48°, zu einer Querschnittsebene des Bohrers von dem an eine kurze Hauptschneide angrenzenden Kernbereich bis zum Außenumfang des Bohrers erstrecken.

Eine Vereinfachung des Bohrerspitzenanschliffs wird erreicht, wenn die äußeren Teilschneiden der langen Hauptschneiden und die kurzen Schneiden einen gleichen Spitzenwinkel haben. Die Spitzenwinkel können beispielsweise im Bereich von von 140° bis 150°, im Besonderen bei 145°, liegen.

Die beiden inneren Teilschneiden können auf gleicher Schneidhöhe angeordnet sein. Analog dazu können die äußeren Teilschneiden relativ zueinander ebenso wie die kurzen Hauptschneiden relativ zueinander auf gleicher Schneidhöhe angeordnet sein.

Die kurzen Hauptschneiden können gegenüber den äußeren Teilschneiden der langen Hauptschneiden aber auch eine definierte Schneidhöhendifferenz, im Besonderen eine größere Schneidhöhe, aufweisen. Die Schneidhöhendifferenz kann beispielsweise im Bereich von 0,01 bis 0,03 mm, im Besonderen bei 0,02 mm, liegen. Durch eine definierte Schneidhöhendifferenz kann die Ratterneigung des Bohrers beim Eindringen der kurzen Hauptschneiden und äußeren Teilschneiden der langen Hauptschneiden in ein Werkstück reduziert und damit die Laufruhe des Bohrers erhöht werden.

Durch eine geradlinige Ausbildung der kurzen Hauptschneiden, der inneren Teilschneiden der langen Hauptschneiden und der äußeren Teilschneiden der langen Hauptschneiden wird der Bohrerspitzenanschliff weiter vereinfacht.

Eine Anordnung jeder Hauptschneide, d.h. der inneren und äußeren Teilschneiden der langen Hauptschneiden und die kurzen Hauptschneiden, in Schnittrichtung gesehen, vor einer Diametralebene des Bohrers gewährleistet eine hohe Schneidenstabilität.

Eine hohe Schneidenstabilität wird des Weiteren dann erreicht, wenn der Spanwinkel der Hauptschneiden größer-gleich 0° ist.

Um eine hohe Zerspanungsgüte zu erreichen, kann jeder Absatz axial und/oder radial hinterschliffen sein. Durch diese Maßnahme wird ein punktgenaues Anbohren ins Volle ermöglicht.

Der erfindungsgemäße Bohrer ist vorzugsweise geradegenutet ausführt. Geradlinig verlaufende Spannuten lassen sich einfach und damit wirtschaftlich fertigen. Durch den oben diskutierten Bohrerspitzenanschliff ist trotz geradlinig verlaufender Spannuten ein guter Spanablauf gewährleistet.

Der Ablauf der Späne bzw. der Spanbruchstücke kann durch die Zufuhr eines Kühlschmierstoffs in die Spannuten des Bohrers weiter verbessert werden. Diesbezüglich kann der Bohrer ein innenliegendes Kühlschmierstoffzufuhrsystem mit im Bereich der Freiflächen, im Besonderen Sekundärfreiflächen, der Hauptschneiden liegenden Austrittsöffnungen aufweisen.

Ein erfindungsgemäßer Bohrer kann aus einem Stück gefertigt, d.h. monolithisch ausgebildet, sein. Alternativ dazu kann der Bohrer aus mehreren Komponenten zusammengesetzt sein. Eine wirtschaftliche Fertigung gerade von längeren Bohrern, z.B. Tieflochbohrern, gelingt dadurch, dass die vier Hauptschneiden an einem an einen Schaft angefügten Schneidkopf eingeschliffen sind. Schneidkopf und Schaft können in diesem Fall aus verschiedenen Materialien hergestellt sein. So kann der Schneidkopf beispielsweise aus Vollhartmetall bestehen, was ein gutes Standvermögen gewährleistet. Der Schaft kann dagegen aus einem preisgünstigen und stabilen Stahlwerkstoff bestehen.

Ein erfindungsgemäßer Bohrer wird im Folgenden anhand eines in den Zeichnungen gezeigten Ausführungsbeispiels näher erläutert. Es zeigt/zeigen:
Fig. 1 eine Stirnansicht einer Bohrerspitze eines erfindungsgemäßen vierschneidigen Tieflochbohrers;
Fig. 2 bis 4 Seitenansichten der Bohrerspitze aus Fig. 1;
Fig. 5 und 6 perspektivische Seitenansichten der Bohrerspitze aus Fig. 1;
Fig. 7 eine gegenüber der Stirnansicht aus Fig. 1 um 90° gedrehte Stirnansicht der Bohrerspitze;
Fig. 8 und 9 Seitenansichten der Bohrerspitze aus Fig. 7;
Fig. 10 eine perspektivische Seitenansicht der Bohrerspitze aus Fig. 7;
Fig. 11 eine Seitenansicht eines Rohlings des erfindungsgemäßen vierschneidigen Tieflochbohrers;
Fig. 12 bis 15 jeweils eine Seitenansicht und eine Draufsicht eines Schafts, eines Überwurfrings und einer Spannhülse des vierschneidigen Bohrers; und
Fig. 16 eine Seitenansicht und eine Draufsicht eines Schneidkopfrohlings des vierschneidigen Bohrers.

In dem in den Figuren gezeigten Ausführungsbeispiel ist der Bohrer als ein vierschneidiger Tieflochbohrer 10 ausgebildet.

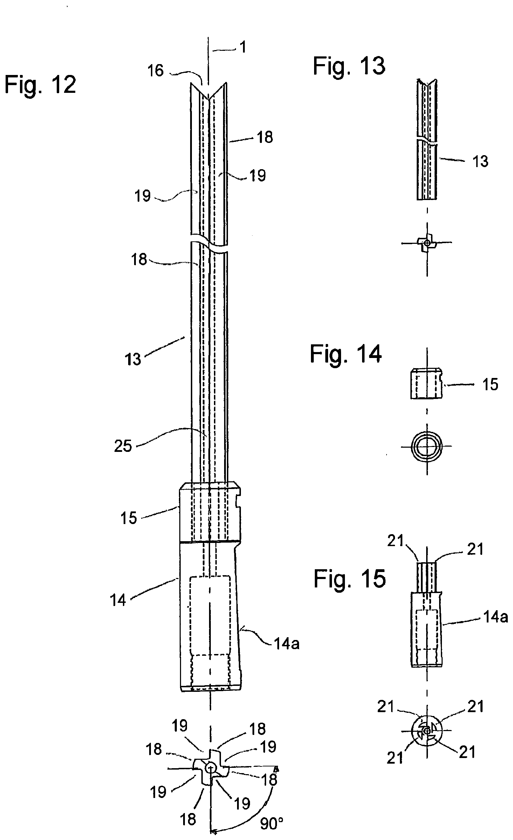

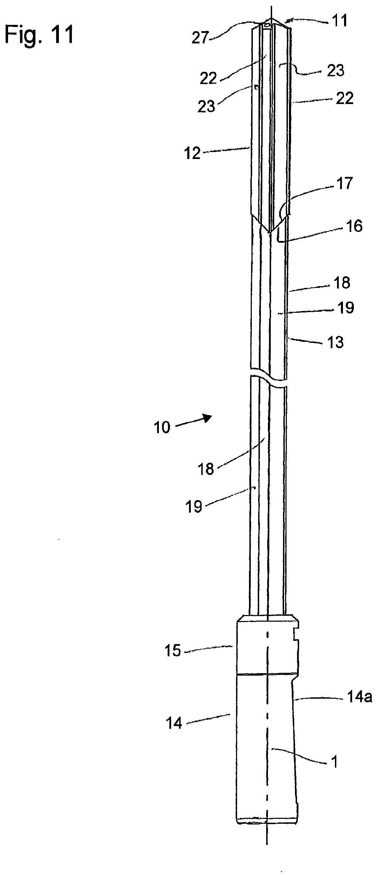

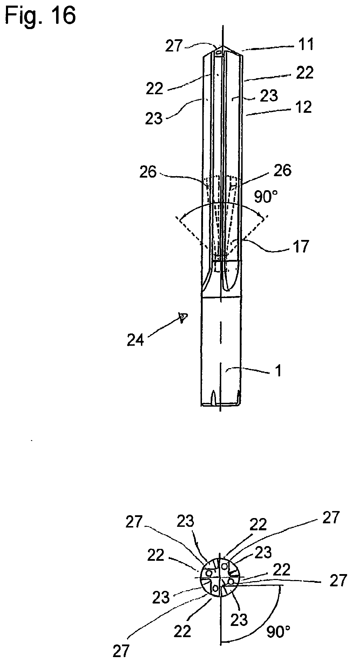

Die Fig. 11 zeigt eine Seitenansicht eines Rohlings des Tieflochbohrers 10, der aus einem Schaft 13, dem an den Schaft 10 angelöteten Schneidkopf 12, einer formschlüssig an den Schaft 13 angefügten Spannhülse 14 und einem den Schaft 13 an der Spannhülse 14 durch Ummantelung und Lötung fixierenden Überwurfring 15 gebildet ist. Der Schaft 11, die Spannhülse 14 und der Überwurfring 15 sind in den Fig. 12 bis 15 näher gezeigt. Ein Rohling des Schneidkopfs 11 ist in Fig. 16 näher gezeigt. Wie die Fig. 11, 12 und 16 zeigen, sind der Schaft 11 und der Schneidkopf 12 jeweils geradegenutet ausgeführt.

Zur Verbindung des Schneidkopfs 12 mit dem Schaft 13 weist der Schaft 13 an seinem schneidkopfseitigen Ende eine als Lötprisma bezeichnete V-förmige Einkerbung 16 auf, in der eine an dem schaftseitigen Ende des Schneidkopfs 12 ausgebildete Keilspitze 17 formschlüssig aufgenommen und durch Lötung mit dem Schaft 13 stoffschlüssig verbunden ist.

Wie die Draufsichten der Fig. 12 und 13 zeigen, weist der Schaft 13 vier, in einem Winkelabstand von 90° angeordnete Stege 22 auf 18 auf, zwischen denen jeweils eine parallel zur Drehachse 1 geradlinig verlaufende Spannut 19 ausgebildet ist.

Die in Fig. 15 gezeigte Spannhülse 14 hat entsprechend der Zahl der Spannuten 19 vier axiale, in etwa viertelkreissegmentförmige Vorsprünge 21, die zur Verbindung des Schafts 13 mit der Spannhülse 14 jeweils in einer der Spannuten 19 formschlüssig eingefügt werden. Mit dem Bezugszeichen 14a ist eine Spannfläche angegeben, über die sich die Spannhülse 14 in einem (nicht gezeigten) Spannfutter drehfest spannen lässt.

Auf der so zwischen der Spannhülse 14 und dem Schaft 13 geschaffenen Schnittstelle sitzt die in Fig. 14 gezeigte Überwurfhülse 15. Zur Fixierung des Schafts 13 an der Spannhülse 14 wird die Überwurfhülse 15 mit dem Schaft 13 und der Spannhülse 14 verlötet.

Der Schneidkopf 12 wird aus dem in Fig. 16 gezeigten Schneidkopfrohling 24 herausgearbeitet. Die V-förmige gestrichelte Linie markiert die an die V-förmige Einkerbung des Schafts 16 anzufügende Keilspitze 17 des Schneidkopfs 12. Analog zum Schaft 13 weist der Schneidkopf 12 vier, in einem Winkelabstand von 90° angeordnete Stege 22 auf, zwischen denen jeweils eine parallel zur Drehachse 1 geradlinig verlaufende, im Wesentlichen V-förmige Spannut 23 ausgebildet ist (vgl. hierzu die Draufsicht in Fig. 16).

In dem an den Schaft 13 angefügten Zustand (vgl, Fig. 11) schließen die Spannuten 19 des Schafts axial an die Spannuten 23 des Schneidkopfs 12 an. Wie die Fig. 11 erkennen lässt, hat der Schneidkopf 12 einen etwas größeren Durchmesser als der Schaft 13.

In den Fig. 12 und 16 ist durch Strichelung ein innenliegendes Kühlschmierstoffzufuhrsystem gezeigt, bestehend aus einem zentralen Hauptkanal 25, der sich durch die Spannhülse 14 und den Schaft 13 hindurch bis zum Schneidkopf 12 erstreckt, und entsprechend der Zahl der Stege 22 bzw. Spannuten 23 vier Zweigkanälen 26, die unmittelbar nach der Fügestelle zwischen dem Schaft 13 und dem Schneidkopf 12 von dem Hauptkanal 25 abzweigen und Austrittsöffnungen 27 aufweisen, die im Bereich der Freiflächen der später beschriebenen vier Hauptschneiden des Schneidkopfs 12 liegen. Der Hauptkanal 25 und die Zweigkanäle 26 verlaufen jeweils geradlinig (Bohrungen).

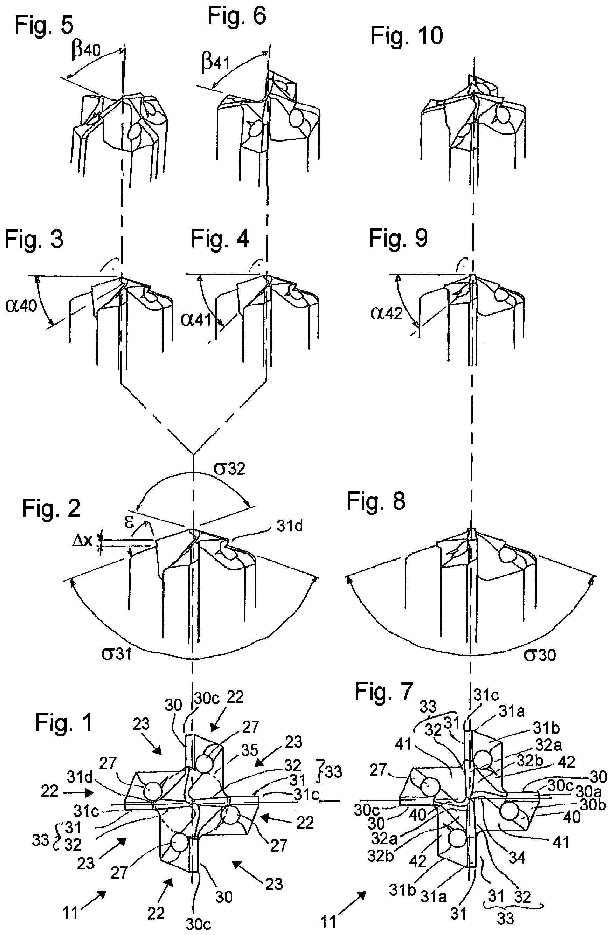

Die Fig. 1 bis 10 zeigen den Spitzenanschliff der Bohrerspitze 11 des vierschneidigen Schneidkopfs 12, der in dem Fig. 11 gezeigten Zustand an dem stirnseitigen Ende des Schneidkopfs 12 durchgeführt wird. Die Fig. 1 bis 10 entsprechen daher einer Schleifanleitung für die Schleifbearbeitung der Bohrerspitze 11 des Schneidkopfs 12.

Die Fig. 1 zeigt, dass an der Bohrerspitze 11 vier Hauptschneiden 33 (je Steg 22 eine Hauptschneide 33) ausgebildet sind. Die vier Hauptschneiden 33 umfassen in dem gezeigten Ausführungsbeispiel zwei bezüglich der Drehachse 1 punktsymmetrisch angeordnete längere oder (im Folgenden:) lange Hauptschneiden 33, die sich jeweils von einer außenumfangsseitigen Schneidenecke 31c bis zu einer Querschneide 34 (vgl. Fig. 7) in der Mitte der Bohrerspitze 11 erstrecken, und zwei bezüglich der Drehachse punktsymmetrisch angeordnete kürzere oder (im Folgenden:) kurze Hauptschneiden 30, die sich jeweils von einer außenumfangsseitigen Schneidenecke 30c in Richtung der, aber nicht bis zur Mitte der Bohrerspitze 11 erstrecken. Jede lange Hauptschneide 33 weist erfindungsgemäß eine sich von der Schneidenecke 31c bis zu einer Stufe oder (im Folgenden:) einem Absatz 31d (vgl. Fig. 2) erstreckende äußere Teilschneide 31 und eine sich von dem Absatz 31d bis zur Querschneide 34 erstreckende innere Teilschneide 32 auf.

Die inneren Teilschneiden 32 haben, in Axial- oder Vorschubrichtung des Tieflochbohrers 10 gesehen, eine größere Schneidhöhe als die äußeren Teilschneide 31 und die beiden kurzen Hauptschneiden 30. Die höher liegenden inneren Teilschneiden 32 können daher auch als Vor- oder Vollbohrschneiden bezeichnet werden, durch die der Tieflochbohrer ins Volle schneiden kann, während die äußeren Teilschneiden 31 und die kurzen Hauptschneiden 30 auch als Aufbohrschneiden bezeichnet werden können, durch die ein durch die inneren Teilschneiden 32 erzeugtes Bohrloch auf den Nenndurchmesser des Tieflochbohrers aufgebohrt wird.

Die höher liegenden inneren Teilschneiden 32 liegen im Bereich des Kerns 35 des Tieflochbohrers 10, während die äußeren Teilschneiden 31 und die beiden kurzen Hauptschneiden 30 außerhalb des Kerns 35 liegen. Die äußeren Teilschneiden 31 und die kurzen Hauptschneiden 30 enden daher radial außerhalb des Kerns 35 bzw. von - außen nach innen gesehen - vor dem Kern 35. In dem gezeigten Ausführungsbeispiel beträgt der Durchmesser des Kerns 35 in etwa das 0,4- bis 0,6-fache, im Besonderen in etwa das 0,5-fache, des Nenndurchmessers des Tieflochbohrers.

Die durch den Absatz 31d erreichte Schneidhöhendifferenz Δx zwischen den inneren Teilschneiden 32 und den äußeren Teilschneiden 31 liegt im Bereich des 0,02 bis 0,1-fachen, im Besonderen des 0,04 bis 0,08-fachen, des Nenndurchmessers des Tieflochbohrers 10. Wie die Fig. 2 erkennen lässt, ist der Absatz 31d axial hinterschliffen. Der mit ∈ angegebene Winkel beträgt beispielsweise 90°.

An jede der Schneidenecken 31c, 30c schließt sich in der üblichen Weise eine hier nicht näher beschriebene geradlinig verlaufende Nebenschneide an.

Die Fig. 1 bis 10 zeigen, dass die äußeren Teilschneiden 31, die inneren Teilschneiden 32 und die kurzen Hauptschneiden 30 jeweils geradlinig ausgebildet sind.

Des Weiteren sind die die äußeren Teilschneiden 31, die inneren Teilschneiden 32 und die kurzen Hauptschneiden 30 mit gleichen Spitzenwinkeln angeordnet. Die in Fig. 2 und Fig. 8 mit δ₃₁, δ₃₂, δ₃₀ angegebenen Spitzenwinkel der äußeren Teilschneiden 31, inneren Teilschneiden 32 und kurzen Hauptschneiden 30 liegen in dem Ausführungsbeispiel im Bereich von 140° bis 150°, im Besonderen bei 145°.

Des Weiteren sind die beiden inneren Teilschneiden 32 auf gleicher Schneidhöhe angeordnet. Des Weiteren sind die äußeren Teilschneiden 31 auf gleicher Schneidhöhe angeordnet, und sind die kurzen Hauptschneiden 30 auf gleicher Schneidhöhe angeordnet. In dem gezeigten Ausführungsbeispiel weisen die kurzen Hauptschneiden 30 jedoch definierte Schneidhöhendifferenz gegenüber den äußeren Teilschneiden 31 auf, die im Bereich von 0,01 bis 0,03 mm, im Besonderen bei 0,02 mm, liegen kann.

Des Weiteren liegen die inneren Teilschneiden 32, die äußeren Teilschneiden 31 und die kurzen Hauptschneiden 30, in Schnittrichtung gesehen, vor einer Diametralebene des Tieflochbohrers 10, d.h. sie schneiden "vor Mitte".

Der in den Figuren nicht angegebene Spanwinkel sämtlicher Hauptschneiden, d.h. der inneren Teilschneiden 32, der äußeren Teilschneiden 31 und der kurzen Hauptschneiden 30, ist in dem gezeigten Ausführungsbeispiel größer-gleich 0°.

In Fig. 7 sind mit den Bezugszeichen 31a, 32a und 30a Primärfreiflachen und mit den Bezugszeichen 31b, 32b und 30b Sekundärfreiflächen bezüglich der äußeren Teilschneiden 32, der inneren Teilschneiden 32 bzw. der kurzen Hauptschneiden 30 angegeben.

Die Fig. 7 zeigt des Weiteren, dass die Austrittsöffnungen 27 der vier Zweigkanäle 26 des oben erwähnten innenliegenden Kühlschmierstoffzufuhrsystems jeweils im Bereich der Freiflächen, im Besonderen im Bereich der Sekundärfreiflächen, einer zugeordneten Hauptschneide liegen.

In den Fig. 1 bis 10 sind eingeschliffene Ausspitzungen 40, 41, 42 zu erkennen, durch die eine Verkürzung der Querschneide 34 (vgl. Fig. 7), eine Korrektur der inneren Teilschneiden 32 oder des in Schnitt- oder Drehrichtung vor einer kurzen Hauptschneide 30 liegenden Kernbereichs erzielt wird. In Fig. 1 oder 7 sind die in die Bohrerspitze 11 eingeschlifffenen Ausspitzungsflächen gut zu erkennen. Durch die Ausspitzung 40 wird eine Verkürzung der Querschneide 34 erzielt. Die Ausspitzung 41 korrigiert die innere Teilschneide 32, so dass die innere Teilschneide 32 in dem gezeigten Ausführungsbeispiel unter einem Winkel zu der äußeren Teilschneide 32 derselben Hauptschneide verläuft. Durch die Ausspitzung 42 wird der in Dreh- oder Schnittrichtung vor einer kurzen Hauptschneide 30 liegende Kernbereich eingeschliffen.

Die Ausspitzungen werden mit Hilfe spezieller (nicht gezeigter) Schleifscheiben eingeschliffen. Die Querschnittskontur jeder Ausspitzung wird daher durch die Form der jeweils verwendeten Schleifscheibe bestimmt. Die Fig. 3 bis 6, 9 und 10 erläutern die Einschliffe, wobei in Fig. 5, 6 und 10 den Tieflochbohrer 10 in einer Lage und Ausrichtung zeigen, in der sich die Einschliffe in eine Richtung senkrecht zur Blattebene erstrecken, und die Fig. 3, 4 und 9 die Neigungswinkel α₄₀, α₄₁, α₄₂ der Einschliffe gegenüber einer Ebene senkrecht zur Drehachse 11 des Tieflochbohrers 10 zeigen.

Die Fig. 3 und 5 zeigen im Besonderen einen Einschliff zur Erzeugung der die Querschneide 34 verkürzenden Ausspitzung 40, die Fig. 4 und 6 einen Einschliff zur Erzeugung der die innere Teilschneide 31 korrigierenden Ausspitzung 41, und die Fig. 9 und 10 einen Einschliff zur Erzeugung der Ausspitzung 42. Die Querschnittskonturen der Einschliffe bzw. Ausspitzungen 40, 41, 42 und damit die Formen der jeweils verwendeten Schleifscheiben sind in Fig. 5, 6 bzw. 10 zu erkennen.

Die Fig. 5, 6 und 10 zeigen, dass die Ausspitzungen 40, 41 bzw. 42, die jeweils in eine zugeordnete Spannut 23 des Tieflbochbohrers 10 münden, einen in etwa V-förmigen Querschnitt mit abgerundetem Grund haben, dessen Öffnungswinkel β₄₀ bzw. β₄₁ beträgt (vgl. Fig. 5, 6), oder einen Querschnitt in Form einer flachen Mulde (vgl. Fig. 10). Der Öffnungswinkel β₄₀ bzw. β₄₁ liegt in dem gezeigten Ausführungsbeispiel im Bereich von 75° bis 85°, z.B. bei 80°.

Die oben erwähnten Neigungswinkel α₄₀, α₄₁, α₄₂ gegenüber einer Ebene senkrecht zur Drehachse 11 des Tieflochbohrers 10 liegen in dem gezeigten Ausführungsbeispiel zwischen 30° und 50°, wobei der Neigungswinkel α₄₀ beispielsweise 35°, der Neigungswinkel α₄₁ beispielsweise 40° und der Neigungswinkel α₄₂ beispielsweise 48° betragen kann.

Selbstverständlich kann ein erfindungsgemäßer Bohrer gegenüber dem oben beschriebenen Ausführungsbeispiel abgewandelt sein.

Beispielsweise ist der anhand der Fig. 1 bis 10 erläuterte Spitzenanschliff grundsätzlich für Bohrer jeder Länge anwendbar. Ein erfindungsgemäßer Bohrer ist daher nicht zwingend auf einen Tieflochbohrer beschränkt.

Abweichend von dem erläuterten Ausführungsbeispiel kann ein erfindungsgemäßer Bohrer, beispielsweise Tieflochbohrer, des Weiteren aus einem Stück gefertigt, d.h. monolithisch, ausgebildet sein.

Des Weiteren kann ein erfindungsgemäßer Bohrer, beispielsweise Tieflochbohrer, spiralgenutet ausgeführt sein.

Abweichend von dem erläuterten Ausführungsbeispiel können die Stege 22 (d.h. die Spannuten 23 bzw. die Hauptschneiden 30, 33) in von 90° verschiedenen Winkelabständen angeordnet sein. Diametral gegenüberliegende Hauptschneiden 33 bzw. 30 können dabei punktsymmetrisch angeordnet sein.

## Patentansprüche

1. Vierschneidiger Bohrer (10), im Besonderen Tieflochbohrer, mit zwei bezüglich der Drehachse (11) punktsymmetrisch angeordneten langen Hauptschneiden (33), die sich jeweils von einer außenumfangsseitigen Schneidenecke (31c) bis zu einer Querschneide (34) in der Mitte der Bohrerspitze (11) erstrecken, und zwei bezüglich der Drehachse (11) punktsymmetrisch angeordneten kurzen Hauptschneiden (30), die sich jeweils von einer außenumfangsseitigen Schneidenecke (30c) in Richtung der Mitte der Bohrerspitze (11) erstrecken, **dadurch gekennzeichnet, dass**
jede lange Hauptschneide (33) eine sich von der Schneidenecke (31c) bis zu einem Absatz (31d) erstreckende äußere Teilschneide (31) und eine sich von dem Absatz (31d) bis zur Querschneide (34) erstreckende innere Teilschneide (32) aufweist, die eine größere Schneidhöhe aufweist als die äußere Teilschneide (31) und die kurzen Hauptschneiden (30),
die äußeren Teilschneiden (31) und die inneren Teilschneiden (32) einen gleichen Spitzenwinkel (δ₃₁, δ₃₂) haben, und
die durch den Absatz (31d) erreichte Schneidhöhendifferenz (Δx) zwischen den inneren Teilschneiden (31) und den äußeren Teilschneiden (32) der langen Hauptschneiden (33) im Bereich des 0,02 bis 0,1-fachen, im Besonderen des 0,04 bis 0,08-fachen, des Nenndurchmessers des Bohrers (10) liegt.

2. Bohrer (10) nach Anspruch 1, **dadurch gekennzeichnet, dass** jede äußere Teilschneide (31) außerhalb des Kerns (35) des Bohrers (10) endet.

3. Bohrer (10) nach Anspruch 1 oder 2, **dadurch gekennzeichnet, dass** jede kurze Hauptschneide (30) außerhalb des Kerns (35) des Bohrers (10) endet.

4. Bohrer (10) nach einem der Ansprüche 1 bis 3, **dadurch gekennzeichnet, dass** die kurzen Hauptschneiden (30) länger sind als die äußeren Teilschneiden (31).

5. Bohrer (10) nach einem der Ansprüche 1 bis 4, **gekennzeichnet durch** einen Kerndurchmesser, der das 0,4- bis 0,6-fache, im Besonderen in etwa das 0,5-fache, des Nenndurchmessers des Bohrers (10) beträgt.

6. Bohrer (10) nach einem der Ansprüche 1 bis 5, **dadurch gekennzeichnet, dass** jede innere Teilschneide (32) über ihre ganze Länge durch eine Ausspitzung (40) korrigiert ist.

7. Bohrer (10) nach Anspruch 6, **dadurch gekennzeichnet, dass** jede innere Teilschneide (32) unter stumpfen Winkel zu der äußeren Teilschneide (31) derselben Hauptschneide verläuft.

8. Bohrer (10) nach einem der der Ansprüche 1 bis 7, **dadurch gekennzeichnet, dass** die Querschneide (32) ausgespitzt ist.

9. Bohrer (10) nach einem der Ansprüche 1 bis 8, **dadurch gekennzeichnet, dass** die äußeren Teilschneiden (31) und die kurzen Hauptschneiden (30) einen gleichen Spitzenwinkel (δ₃₁, δ₃₀) haben.

10. Bohrer (10) nach einem der Ansprüche 1 bis 9, **dadurch gekennzeichnet, dass** die äußeren Teilschneiden (31) und die kurzen Hauptschneiden (30) eine definierte Schneidhöhendifferenz aufweisen.

11. Bohrer (10) nach Anspruch 10, **dadurch gekennzeichnet, dass** die kurzen Hauptschneiden (30) eine größere Schneidhöhe aufweisen als die äußeren Teilschneiden (31).

12. Bohrer (10) nach einem der Ansprüche 1 bis 11, **dadurch gekennzeichnet, dass** die kurzen Hauptschneiden (30), die inneren Teilschneiden (32) und die äußeren Teilschneiden (31) jeweils geradlinig verlaufen.

13. Bohrer (10) nach einem der Ansprüche 1 bis 12, **dadurch gekennzeichnet, dass** die Hauptschneiden (30, 33), in Dreh- oder Schnittrichtung gesehen, jeweils vor einer Diametralebene des Bohrers (10) liegen.

14. Bohrer (10) nach einem der Ansprüche 1 bis 13, **dadurch gekennzeichnet, dass** der Spanwinkel der Hauptschneiden (30, 33) größer-gleich 0° beträgt.

15. Bohrer (10) nach einem der Ansprüche 1 bis 14, **dadurch gekennzeichnet, dass** der Absatz (31d) axial und/oder radial hinterschliffen ist.

16. Bohrer (10) nach einem der Ansprüche 1 bis 15, **gekennzeichnet durch** geradlinig verlaufende Spannuten (23).

17. Bohrer (10) nach einem der Ansprüche 1 bis 16, **gekennzeichnet durch** ein innenliegendes Kühlschmierstoffzufuhrsystem mit im Bereich der Freiflächen (30a, 30b, 31a, 31b, 32a, 32b), im Besonderen von Sekundärfreiflächen (30b, 31b, 32b), der Hauptschneiden (30, 33) liegenden Austrittsöffnungen (27).

18. Bohrer (10) nach einem der Ansprüche 1 bis 17, **dadurch gekennzeichnet, dass** die vier Hauptschneiden (30, 33) an einem an einen Schaft (13) angefügten Schneidkopf (12) eingeschliffen sind.

## Claims

1. A four-edged drill (10), in particular a deep hole drill, with two long main cutting edges (33) arranged in a point symmetrical manner relative to the axis of rotation (11), which each extend from an outer circumferential cutting corner (31c) to a chisel edge (34) in the middle of the drill tip (11), and two short main cutting edges (30) arranged in a point symmetrical manner relative to the axis of rotation (11), which each extend from an outer circumferential cutting corner (30c) in the direction of the middle of the drill tip (11), **characterized in that**
each long main cutting edge (33) has an outer partial cutting edge (31) extending from the cutting corner (31c) up to a shoulder (31d), and an inner partial cutting edge (32) extending from the shoulder (31d) as far as the chisel edge (34), the inner partial cutting edge (32) having a greater cutting height than the outer partial cutting edge (31) and the short main cutting edges (30),
the outer partial cutting edges (31) and the inner partial cutting edges (32) have an identical rake angle (δ₃₁, δ₃₂), and
the cutting height difference (Δx) between the inner partial cutting edges (31) and the outer partial cutting edges (32) of the long main cutting edges (33) achieved by the shoulder (31d) is within a range from 0.02 to 0.1, in particular 0.04 to 0.08 times the nominal diameter of the drill (10).

2. The drill (10) according to claim 1, **characterized in that** each outer partial cutting edge (31) ends outside of the core (35) of the drill (10).

3. The drill (10) according to claim 1 or 2, **characterized in that** each short main cutting edge (30) ends outside of the core (35) of the drill (10).

4. The drill (10) according to any of claims 1 to 3, **characterized in that** the short main cutting edges (30) are longer than the outer partial cutting edges (31).

5. The drill (10) according to any of claims 1 to 4, **characterized by** a core diameter that measures 0.4 to 0.6 times, in particular approximately 0.5 times the nominal diameter of the drill (10).

6. The drill (10) according to any of claims 1 to 5, **characterized in that** each inner partial cutting edge (32) is corrected over its entire length by a point thinning section (40).

7. The drill (10) according to claim 6, **characterized in that** each inner partial cutting edge (32) runs at an obtuse angle to the outer partial cutting edge (31) of the same main cutting edge.

8. The drill (10) according to any of claims 1 to 7, **characterized in that** the chisel edge (32) is point thinned.

9. The drill (10) according to any of claims 1 to 8, **characterized in that** the outer partial cutting edges (31) and the short main cutting edges (30) have an identical rake angle (δ₃₁, δ₃₀).

10. The drill (10) according to any one of claims 1 to 9, **characterized in that** the outer partial cutting edges (31) and the short main cutting edges (30) have a defined cutting height difference.

11. The drill (10) according to claim 10, **characterized in that** the short main cutting edges (30) have a larger cutting height than the outer partial cutting edges (31).

12. The drill (10) according to any of claims 1 to 11, **characterized in that** the short main cutting edges (30), the inner partial cutting edges (32) and the outer partial cutting edges (31) each run along a straight line.

13. The drill (10) according to any of claims 1 to 12, **characterized in that** the main cutting edges (30, 33) each lie in front of a diametral plane of the drill (10) as viewed in the rotational or cutting direction.

14. The drill (10) according to any of claims 1 to 13, **characterized in that** the rake angle of the main cutting edges (30, 33) is greater than or equal to 0°.

15. The drill (10) according to any of claims 1 to 14, **characterized in that** the shoulder (31d) is axially and/or radially relief ground.

16. The drill (10) according to any of claims 1 to 15, **characterized by** chip grooves (23) running along a straight line.

17. The drill (10) according to any of claims 1 to 16, **characterized by** an interior cooling lubricant supply system with outlet openings (27) that lie in the area of the free surfaces (30a, 30b, 31a, 31b, 32a, 32b), in particular secondary free surfaces (30b, 31b, 32b) of the main cutting edges (30, 33).

18. The drill (10) according to any of claims 1 to 17, **characterized in that** the four main cutting edges (30, 33) are ground into a cutting head (12) attached to a shank (13).

## Revendications

1. Foret à quatre tranchants (10), en particulier foret pour trous profonds, avec deux tranchants principaux longs (33) disposés en symétrie ponctuelle par rapport à l'axe de rotation (11) qui s'étendent respectivement d'un coin de tranchant (31c) côté périphérie extérieure à un tranchant transversal (34) au centre de la pointe de foret (11), et deux tranchants principaux courts (30) disposées en symétrie ponctuelle par rapport à l'axe de rotation (11) qui s'étendent respectivement d'un coin de tranchant (30c) côté périphérie extérieure en direction du centre de la pointe de foret (11), **caractérisé en ce que**
chaque tranchant principal long (33) présente un tranchant partiel extérieur (31) s'étendant du coin de tranchant (31c) à un épaulement (31d) et un tranchant partiel intérieur (32) s'étendant de l'épaulement (31d) au tranchant transversal (34), qui présente une hauteur de coupe plus grande que le tranchant partiel extérieur (31) et les tranchants principaux courts (30),
les tranchants partiels extérieurs (31) et les tranchants partiels intérieurs (32) présentent un même angle de pointe (δ₃₁, δ₃₂), et
la différence de hauteur de coupe (Δx) obtenue par l'épaulement (31d) entre les tranchants partiels intérieurs (31) et les tranchants partiels extérieurs (32) des tranchants principaux longs (33) se situe dans une plage de 0,02 à 0,1 fois, en particulier de 0,04 à 0,08 fois le diamètre nominal du foret (10).

2. Foret (10) selon la revendication 1, **caractérisé en ce que** chaque tranchant partiel extérieur (31) se termine à l'extérieur du noyau (35) du foret (10).

3. Foret (10) selon la revendication 1 ou 2, **caractérisé en ce que** chaque tranchant principal court (30) se termine à l'extérieur du noyau (35) du foret (10).

4. Foret (10) selon l'une quelconque des revendications 1 à 3, **caractérisé en ce que** les tranchants principaux courts (30) sont plus longs que les tranchants partiels extérieurs (31).

5. Foret (10) selon l'une quelconque des revendications 1 à 4, **caractérisé par** un diamètre de noyau qui est de 0,4 à 0,6 fois, en particulier d'environ 0,5 fois le diamètre nominal du foret (10).

6. Foret (10) selon l'une quelconque des revendications 1 à 5, **caractérisé en ce que** chaque tranchant partiel intérieur (32) est corrigé sur toute sa longueur par une excroissance (40).

7. Foret (10) selon la revendication 6, **caractérisé en ce que** chaque tranchant partiel intérieur (32) s'étend selon un angle obtus par rapport au tranchant partiel extérieur (31) du même tranchant principal.

8. Foret (10) selon l'une quelconque des revendications 1 à 7, **caractérisé en ce que** le tranchant transversal (32) est effilé.

9. Foret (10) selon l'une quelconque des revendications 1 à 8, **caractérisé en ce que** les tranchants partiels extérieurs (31) et les tranchants principaux courts (30) présentent un même angle de pointe (δ₃₁, δ₃₀).

10. Foret (10) selon l'une quelconque des revendications 1 à 9, **caractérisé en ce que** les tranchants partiels extérieurs (31) et les tranchants principaux courts (30) présentent une différence de hauteur de coupe définie.

11. Foret (10) selon la revendication 10, **caractérisé en ce que** les tranchants principaux courts (30) présentent une hauteur de coupe plus grande que les tranchants partiels extérieurs (31).

12. Foret (10) selon l'une quelconque des revendications 1 à 11, **caractérisé en ce que** les tranchants principaux courts (30), les tranchants partiels intérieurs (32) et les tranchants partiels extérieurs (31) s'étendent respectivement en ligne droite.

13. Foret (10) selon l'une quelconque des revendications 1 à 12, **caractérisé en ce que** les tranchants principaux (30, 33), vus dans le sens de la rotation ou de coupe, sont respectivement situés en avant d'un plan diamétral du foret (10).

14. Foret (10) selon l'une quelconque des revendications 1 à 13, **caractérisé en ce que** l'angle de coupe des tranchants principaux (30, 33) est supérieur ou égal à 0°.

15. Foret (10) selon l'une quelconque des revendications 1 à 14, **caractérisé en ce que** l'épaulement (31d) est détalonné axialement et/ou radialement.

16. Foret (10) selon l'une quelconque des revendications 1 à 15, **caractérisé par** des goujures (23) s'étendant en ligne droite.

17. Foret (10) selon l'une quelconque des revendications 1 à 16, **caractérisé par** un système d'alimentation en lubrifiant de refroidissement situé à l'intérieur avec des ouvertures de sortie (27) situées dans la zone des surfaces libres (30a, 30b, 31a, 31b, 32a, 32b), en particulier de surfaces libres secondaires (30b, 31b, 32b), des tranchants principaux (30, 33).

18. Foret (10) selon l'une quelconque des revendications 1 à 17, **caractérisé en ce que** les quatre tranchants principaux (30, 33) sont affûtés sur une tête de coupe (12) rapportée sur une tige (13).
